# EUROPEAN PATENT SPECIFICATION

(11) **EP 2 449 615 B1**
(45) Date of publication and mention of the grant of the patent: **30.11.2016**
(21) Application number: 10794619.6
(22) Date of filing: 29.06.2010
(51) Int. Cl.: H01M 6/16, H01M 4/58, H01M 4/38

(54) **REMOVAL OF IMPURITIES FROM LITHIUM-IRON DISULFIDE ELECTROCHEMICAL CELLS**
ENTFERNUNG VON VERUNREINIGUNGEN AUS ELEKTROCHEMISCHEN LITHIUM-EISENDISULFID-ZELLEN
ÉLIMINATION DES IMPURETÉS DE CELLULES ÉLECTROCHIMIQUES DE TYPE LITHIUM-DISULFURE DE FER

(30) Priority: 01.07.2009 US 222199 P
(43) Date of publication of application: 09.05.2012
(73) Proprietor: Energizer Brands, LLC, St. Louis, Missouri 63141 (US)
(72) Inventor: SCHUBERT, Mark, A., Medina Ohio 44256 (US)
(74) Representative: dompatent von Kreisler Selting Werner - Partnerschaft von Patent- und Rechtsanwälten mbB
(86) International application number: PCT/US2010/040317
(87) International publication number: WO 2011/002739

(56) References cited:
- EP-A1- 1 696 501
- FR-A1- 2 440 625
- JP-A- S6 035 461
- US-A- 3 764 385
- US-A- 4 895 778
- US-A- 5 472 808
- US-A1- 2005 095 508
- US-A1- 2008 280 211

## Description

### BACKGROUND OF INVENTION

This invention relates to the use of chelators in the electrolyte solution to remove soluble impurities from electrochemically active materials for batteries, such as pyrite.

As a general rule, the electrolyte in any battery must be selected to provide sufficient electrolytic and electrical conductivity to meet the cell discharge requirements over the desired temperature range. As demonstrated by U.S. Patent No. 4,129,691 to Broussely, increasing the solute (i.e., salt) concentration in a lithium battery electrolyte is expected to result in a corresponding increase in the conductivity and usefulness of that electrolyte (at least to a certain point), with higher conductivity presumed to be a desirable attribute. However, other limitations-such as the solubility of the solute in specific solvents, the formation of an appropriate passivating layer on lithium-based electrodes and/or the compatibility of the solvent with the electrochemically active or other materials in the cell-make the selection of an appropriate electrolyte system difficult. As a non-limiting example, U.S. Patent No. 4,804,595 to Bakos describes how certain ethers are not miscible with solvents such as propylene carbonate. Additional electrolyte deficiencies and incompatibilities are well known and documented in this art, particularly as they relate to LiFeS₂ cells and lithium's reactivity with many liquids, solvents and common polymeric sealing materials.

Ethers are often desirable as lithium battery electrolyte solvents because of their generally low viscosity, good wetting capability, good low temperature discharge performance and good high rate discharge performance, although their polarity is relatively low compared to some other common solvents. Ethers are particularly useful in cells with pyrite because the cells tend to be more stable as compared to higher voltage cathode materials in ethers, where degradation of the electrode surface or unwanted reactions with the solvent(s) might occur (e.g., polymerization). Among the ethers that have been used in LiFeS₂ cells are 1,2-dimcthoxyethane (DME) and 1,3-dioxolane (DIOX), as taught by U.S. Patent Nos. 5,514,491 or 6,218,054 or European Patent 0 529 802 B1, all to Webber. Ethers have also been used in various solvents blends as suggested by U.S. Patent Nos. 7,316,868 to Gorkovenko (use of DIOX and 5-6 carbon 1,3-dialkoxyalkanes); 4,952,330 to Marple et al. (use of a set ratio of linear ethers, such as DME, cylic ethers, such as DIOX, and alkylene carbonates, such as propylene carbonate); 3,996,069 to Kronenberg (use of 3-methyl-2-oxazolidone and DIOX and/or DME); and U.S. Patent Publication Nos. 20080318123 to Jiang (use of DIOX and furan-based solvents, e.g. THF) and 20080026296 to Bowden (use of sulfolane and DME).

Other solvents not specifically containing DIOX or DME may also be possible, such as those disclosed in U.S. Patent No. 5,229,227 to Webber (use of 3-methyl-2-oxazolidone with other polyalkylyene glycol ethers such as diglyme). However, because of interactions among solvents, as well as the potential effects of solutes and/or electrode materials on those solvents, ideal electrolyte solvent blends and the resulting discharge performance of the cell are often difficult to predict without actually testing the proposed blend in a functioning electrochemical cell.

In order to provide adequate conductivity, a wide variety of electrolyte solutes has been used for lithium-based cells, including lithium iodide (LiI), lithium trifluoromethanesulfonate (LiCF₃SO₃ or "triflate"), lithium bistrifluoromethylsulfonyl imide (Li(CF₃SO₂)₂N or "imide"), lithium perchlorate (LiClO₄), lithium hexafluoroarsenate (LiAsF₆) and others. While electrolytes containing lithium triflate can provide fair cell electrical and discharge characteristics, such electrolytes have relatively low electrical conductivity, and lithium triflate is relatively expensive. Lithium iodide (LiI) has been used as an alternative to lithium triflate to both reduce cost and improve cell electrical performance, as discussed in U.S. Patent No. 5,514,491 to Webber. One particular brand of AA-sized FR06 batteries sold by Energizer Holdings Inc.-currently includes a nonaqueous electrolyte with an approximate 0.75 molal concentration of LiI salt in a solvent mixture containing DIOX and DME. Still other examples of solutes and combinations of solutes can be found in U.S. Patent No. 7,479,348 to Issaev (use of mixed salt including LiBF₄) and U.S. Patent Publication Nos. 20080088278 to Issaev (use of LiPF₆); and 20070000121 to Bowden (use of mixed salt including triflate and imide).

Additives may be employed in the electrolyte to enhance certain aspects of a cell and/or its performance. For example, U.S. Patent No. 5,691,083 to Bolster describes the use of a very low concentration of potassium salt additives to achieve a desired open circuit voltage in cells with a cathode material including FeS₂, MnO₂ or TiS₂. U.S. Publication No. 20080026290 to Jiang discloses the use of an aluminum additive to slow the development of a passivation film on the surface of the lithium electrode. U.S. Patent Publication Nos. 20090023054 to Jiang and 20080003500 to Issaev disclose the use of other iodine or iodide containing additives intended to improve the discharge performance of an lithium-iron disulfide cell. In each of these examples, the benefit of the additive(s) selected must be balanced against any deleterious reactions or effects (in terms of discharge performance, safety and longevity of the battery).

It is generally believed higher concentrations of solute(s) normally improve the conductivity of the electrolyte, although it is understood that there is ultimately a limit to this effect based upon certain variables, such as the viscosity of the solution (i.e., conductivity improves with concentration until the concentration makes the resulting solution too viscous, at which point conductivity drops off dramatically). Additionally, certain systems (typically in rechargeable lithium-sulfur battery systems where non-chalcogenic polysulfides are the preferred cathode material) utilize a "catholyte" where portions of the electrode itself dissolve into the electrolyte solution to provide ionic conductivity, such that the concentration of salt is an indicator as to the state of charge in the battery. In such systems, minimal to non-existent concentrations of lithium ions may be provided to a fully charged cell without compromising performance as taught by U.S. Patent No. 7,189,477 to Mikhaylik. Ultimately, LiFeS₂ and other lithium electrochemical cells maintain an almost constant salt content in the electrolyte and do not exhibit this propensity to provide ions from the electrodes to the electrolyte. Therefore, catholyte systems have no relevance to LiFeS₂ systems in this regard, and more generally illustrate the pitfalls associated with blindly applying teachings from a given electrochemical system to another, dissimilar system.

JP S60 35461 relates to a battery constituted by using Li as its negative electrode, and an organic electrolyte in which a chelating agent such as phenanthroline which can combine with a metal contained in a positive active material to form a complex is added.

Since the thus formed complex does not pass through a porous separator due to its large molecular size, any decrease in the characteristic of the battery which might be caused due to depositions formed on the negaitve electrode is prevented.

EP 1 696 501 relates to an electrolyte for a lithium battery and a lithium battery comprising the same. The electrolyte includes a non-aqueous organic solvent, a lithium salt, and a first additive capable of forming a chelating complex with a transition metal and which is stable at voltages ranging from about 2.5 to about 4.8 V.

FR 2 440 625 relates to electric current producing cells having alkali metal-containing anodes, solid cathodes, and electrolytes, wherein the electrolytes contain closoborane and/or closocarborane compounds in aprotic solvent with a chelating agent.

US 4 895 778 discloses a method for purifying elecrolytes used in alkali battery systems and containing transition metal solutes as impurities. An electrolyte is mixed with or fed through a column containing poly(acrylamideoxime) resin and the resin chelates the transition metal solute impurities found in typical organic solvents.

US 2005/095508 describes a lithium-iron disulfide primary battery capable of suppressing the elevation of the open circuit voltage during the storage of battery, said battery including an electrolyte dissolved in an organic solvent including at least an alkylamide solvent.

US 2008/280211 discloses an electrolyte for lithium secondary batteries comprising: a chelating agent, which forms complexes with transition metal ions in the battery, and at the same time does not react and coordinate with lithium ions; a non-aqueous solvent; and an electrolyte salt, as well as a lithium secondary battery comprising the electrolyte.

One particularly difficult problem in electrochemical cells, and more particularly in lithium-iron disulfide cells (whose cathodes are made from mineral-grade pyrite that often has as much as 5 wt.% of inactive materials, such as silicon oxide, metals and other unwanted and/or electrochemically inactive minerals/materials), is the fact that even small levels of such impurities in the solute, solvent, electrolyte additives and/or electrochemically active materials themselves may dissolve into the electrolyte of the cell. Once dissolved, these impurities may cause or contribute to a phenomenon known as "soft shorting," as known in the art as described in U.S. Patent Publication 20090162754 to Cotton and elsewhere, where unwanted dendritic growths form between the electrodes. In lithium-iron disulfide cells, these dendritic growths are believed to be formed by metals plating onto the electrodes and eventually penetrating the separator.

### SUMMARY OF INVENTION

A chelating additive that is non-reactive with respect to the solvent(s), solute(s) and electrochemically active materials in a battery, and optionally may be soluble in electrolyte, is contemplated. The additive will sequester metal ions, such as zinc ions, in a coordination complex of sufficient stability to prevent ionic plating on the surface of the electrodes. Organic chelators of a polymeric or non-polymeric nature that dissolve in ether solvents are preferred. More particularly, chelators that are soluble in mixtures of DIOX and DME and bind with zinc and ferrous ions are preferred. Poly(ethyl acrylate/acrylic acid) and diphenylthiocarbazone, as well as various derivatives thereof, are specific, non-limiting examples of such chelators.

Preferably, a cell in one embodiment has an anode made of lithium or lithium alloy, such as lithium with less than 1% aluminum. The cathode includes iron disulfide coated onto a current collector, although any material with a maximum potential versus lithium of less than or equal to 2.8 V may be considered. A separator is disposed between the two electrodes. Preferably, the separator is a polymeric separator having a thickness between 12 and 25 microns. The electrodes and separator may be spirally wound into a jellyroll electrode assembly.

In one embodiment, the electrolyte includes lithium iodide dissolved in a solvent blend that includes 1,3-dioxolane and at least one acyclic ether, such as 1,2-dimethoxyethane or digylme. Additional, optional cosolvents, such as 3,5-dimethylisoxazole, can be included. The preferred amount of dioxolane in the electrolyte is between 60 to 70 volume percent. Other solutes, such as imide and/or triflate, may be used in addition or in place of the iodide. Other solvents, such as sulfolane and tetrahyrdrofuran may be used in place of or in addition to DIOX and/or DME.

Methods for manufacturing electrochemical cells and/or for removing soluble impurities from the electrochemically active material of an electrochemical cell are also contemplated. A chelator capable of sequestering at least one of zinc, ferric and ferrous ions is identified. The compatibility of a chelator is verified with respect to a selected electrolyte blend (i.e., solvent(s) and solute(s)). An electrode assembly is then provided to a cell container and the chelator and electrolyte blend are provided to the container, either separately or in combination. Alternatively, the chelator may be provided, bound or applied to any other internal component of the cell that is likely to be exposed to the impurities of interest. Any of the materials identified in the embodiments above may be used according to these methods.

The present invention relates to a primary electrochemical cell (10) comprising:
an anode (18),
a cathode (20) including an active material having a maximum potential versus lithium that is less than 2.8 volts and a nominal operating voltage of 1.5 volts or less; and
a liquid electrolyte characterized in that the liquid electrolyte comprises a chelating agent selected from the group consisting of: poly(ethyl acrylate/acrylic acid), derivatives of poly(ethyl acrylate/acrylic acid), diphenylthiocarbazone, derivatives of diphenylthiocarbazone, poly(acrylamide/acrylic acid), poly(methyl methacrylate/methacrylic acid), poly(n-butyl acrylate/acrylic acid), poly(ethylene/acrylic acid), poly(butadiene/maleic acid), ethylenediaminetetraacetic acid,
phenothiazine and carboxymethylcellulose.

Further embodiments include any one or combination of the following features:
- wherein the chelating agent remains soluble in the liquid electrolyte after the at least one metal ion impurity is sequestered by the chelating agent;
- wherein the chelating agent comprises a polychelatogen;
- wherein the metal ion impurity is selected from the consisting of: zinc ions, ferric ions, ferrous ions and copper ions; and
- wherein the anode consists essentially of lithium or a lithium alloy and the cathode includes iron disulfide.

The present invention further relates to use of a chelating agent selected from the group consisting of:
poly(ethyl acrylate/acrylic acid), derivatives of poly(ethyl acrylate/acrylic acid), diphenylthiocarbazone, derivatives of diphenylthiocarbazone, poly(acrylamide/acrylic acid), poly(methyl methacrylate/methacrylic acid), poly(n-butyl acrylate/acrylic acid),
poly(ethylene/acrylic acid), poly(butadiene/maleic acid), ethylenediaminetetraacetic acid,
phenothiazine and carboxymethylcellulose in a liquid electrolyte of a primary electrochemical cell (10) for sequestering at least one metal ion impurity present within the cell.

Preferred embodiments are evident from the dependent claims

### BRIEF DESCRIPTION OF DRAWINGS

Figure 1 shows a cross sectional view of a LiFeS₂ battery according to one embodiment of the invention.
Figure 2 shows the general structures of various types of polymer-metal complexes, with Figure 2A showing the carboxylic type, 2B showing the acrylamide type, 2C the maleylglycine type and 2D the amine type.

### DETAILED DESCRIPTION OF INVENTION

As used herein the terms listed below are defined and used throughout this disclosure as follows:
ambient (or room) temperature - between 20°C and 25°C; unless otherwise stated, information is provided at ambient temperature.
anode - the negative electrode; more specifically, within the meaning of the invention, it comprises an electrochemically active material capable of being oxidized during an electrochemical reaction, such as pure lithium or an alloy of lithium having an excess of 99 wt.% of lithium, thereby donating electrons to an external circuit; the electrochemically active material can be coated onto a metallic current collector and mixed with one or more rheological, polymeric and/or conductive additives.
cathode - the positive electrode; more specifically, in a lithium-iron disulfide cell, it consists essentially of a cathode mixture including iron disulfide (and/or doped derivatives thereof) as the primary electrochemically active material (e.g., greater than 50%, more preferably greater than 80% to 95%, and most preferably 100%) and optional rheological, polymeric and/or conductive additives at least partially coated onto both sides of a metallic current collector substrate; this definition specifically excludes cathodes that are in pellet form;
cell housing - the structure that physically encloses the electrochemically active materials, safety devices and other inert components which comprise a fully functioning battery; typically consists of a container (formed in the shape of a cup, also referred to as a "can") and a closure (fitting over the opening of the container, typically consists of venting and sealing mechanisms for impeding electrolyte egress and moisture/atmospheric ingress).

DIOX - a dioxolane-based solvent, typically 1,3-dioxolane.
DME - a dimethoxyethanc-based solvent, typically 1,2-dimethoxyethane.
electrolyte - one or more solutes dissolved within one or more liquid, organic solvents; this definition does not encompass "molten salts" (also be referred to as ionic liquids) used in high temperature batteries.
jellyroll (or spirally wound) electrode assembly - strips of anode and cathode, along with an appropriate polymeric separator, are combined into an assembly by winding along their lengths or widths, e.g., around a mandrel or central core.
nominal - a value, specified by the manufacturer, that is representative of what can be expected for that characteristic or property.
salt - as part of the electrolyte, an ionizable compound, typically including lithium or one or more metals from Groups 1 and 2 of the Periodic Table, dissolved in one or more liquid, organic solvents.

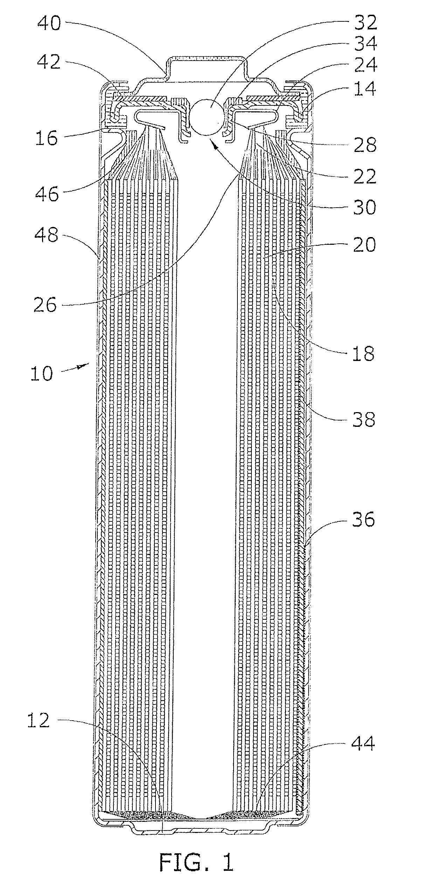

The invention can be better understood with reference to FIG. 1, which shows a specific cell design that may be implemented. Cell 10 is preferably an FR6 type cylindrical LiFeS₂ battery cell, although the invention should have equal applicability to other sizes (e.g., FR03) or cell chemistries which require a nonaqueous electrolyte of the type contemplated herein. As such, a preferred embodiment includes a cell possessing a nominal operating voltage of 1.5 volts. Cell 10 has a housing that includes a container in the form of a can 12 with a closed bottom and an open top end that is closed with a cell cover 14 and a gasket 16. The can 12 has a bead or reduced diameter step near the top end to support the gasket 16 and cover 14. The gasket 16 is compressed between the can 12 and the cover 14 to seal an anode or negative electrode 18, a cathode or positive electrode 20 and electrolyte within the cell 10.

The anode 18, cathode 20 and a separator 26 are spirally wound together into an electrode assembly. The cathode 20 has a metal current collector 22, which extends from the top end of the electrode assembly and is connected to the inner surface of the cover 14 with a contact spring 24. Alternatively, the collector 22 may be welded to the cover 14 or spring 24 via a lead, which itself can be integrally formed on or in the cathode 20. The anode 18 is electrically connected to the inner surface of the can 12 by a metal lead (or tab) 36. The lead 36 is fastened to the anode 18, extends from the bottom of the electrode assembly, is folded across the bottom and up along the side of the electrode assembly. The lead 36 makes pressure contact with the inner surface of the side wall of the can 12. After the electrode assembly is wound, it can be held together before insertion by tooling in the manufacturing process, or the outer end of material (e.g., separator or polymer film outer wrap 38) can be fastened down, by heat sealing, gluing or taping, for example. Alternatively, the lead can be repositioned relative to its placement on the anode (to eliminate the need for folding the lead around the bottom of the jellyroll), welded and/or placed in contact with the terminal cover 40.

The terminal portion of the electrode lead 36, disposed between the side of the electrode assembly and the side wall of the can, may have a shape prior to insertion of the electrode assembly into the can, preferably non-planar that enhances electrical contact with the side wall of the can and provides a spring-like force to bias the lead against the can side wall. During cell manufacture, the shaped terminal portion of the lead can be deformed, e.g., toward the side of the electrode assembly, to facilitate its insertion into the can, following which the terminal portion of the lead can spring partially back toward its initially non-planar shape, but remain at least partially compressed to apply a force to the inside surface of the side wall of the can, thereby making good physical and electrical contact with the can.

An insulating cone 46 is located around the peripheral portion of the top of the electrode assembly to prevent the cathode current collector 22 from making contact with the can 12, and contact between the bottom edge of the cathode 20 and the bottom of the can 12 is prevented by the inward-folded extension of the separator 26 and an electrically insulating bottom disc 44 positioned in the bottom of the can 12. Alternatively, the can 12 could possess positive polarity thereby permitting direct contact between the cathode or cathode current collector and the can itself.

Cell 10 has a separate positive terminal cover 40, which is held in place by the inwardly crimped top edge of the can 12 and the gasket 16 and has one or more vent apertures (not shown). The can 12 serves as the negative contact terminal. An insulating jacket, such as an adhesive label 48, can be applied to the side wall of the can 12.

Disposed between the peripheral flange of the terminal cover 40 and the cell cover 14 is a positive temperature coefficient (PTC) device 42 that substantially limits the flow of current under abusive electrical conditions. Cell 10 also includes a pressure relief vent. The cell cover 14 has an aperture comprising an inward projecting central vent well 28 with a vent hole 30 in the bottom of the well 28. The aperture is sealed by a vent ball 32 and a thin-walled thermoplastic bushing 34, which is compressed between the vertical wall of the vent well 28 and the periphery of the vent ball 32. When the cell internal pressure exceeds a predetermined level, the vent ball 32, or both the ball 32 and bushing 34, is forced out of the aperture to release pressurized gases from the cell 10. In other embodiments, the pressure relief vent can be an aperture closed by a rupture membrane, such as disclosed in U.S. Patent Application Publication No. 20050244706, or a relatively thin area such as a coined groove, that can tear or otherwise break, to form a vent aperture in a portion of the cell, such as a sealing plate or container wall.

### Electrolyte

A nonaqueous electrolyte, containing water only in very small quantities as a contaminant (e.g., no more than 500 parts per million by weight, depending on the electrolyte salt being used), is deposited into the cell housing during manufacture. Because the electrolyte is the primary media for ionic transfer in a LiFeS₂ cell, selection of an appropriate solvent and solute combination is critical to optimizing the performance of the cell. Moreover, the solute and solvents selected for the electrolyte must possess appropriate miscibility and viscosity for the purposes of manufacture and use of the resulting cell, while still delivering appropriate discharge performance across the entire spectrum of temperatures potentially experienced by batteries (i.e., - 40° C to 60° C). Furthermore, the electrolyte must be non-reactive and non-volatile (or at least possess a low enough boiling point to be practically retained by conventional polymeric seals and closure mechanisms), particularly in consideration of the chelating additive(s) contemplated by this invention.

Miscibility and viscosity of the solvents and the electrolyte are key to the manufacturing and operational aspects of the battery. All solvents used in the blend must be completely miscible to insure a homogeneous solution. Similarly, in order to accommodate the requirements of high volume production, the solvents must possess a sufficiently low viscosity to flow and/or be dispensed quickly.

Additionally, the solvents and the electrolyte must possess a boiling point appropriate to the temperature range in which the battery will most likely be exposed and stored (i.e., -40° C to 60° C or greater). More specifically, the solvent(s) must be sufficiently non-volatile to allow for safe storage and operation of the battery within this stated temperature range. Similarly, the solvents and the electrolyte must not react with the electrode materials in a manner that degrades the electrodes or adversely affects performance of the battery upon discharge.

Suitable organic solvents that have been or may be used in LiFeS₂ or other cells have included one or more of the following: 1,3-dioxolane; 1,3-dioxolane based ethers (e.g., alkyl-and alkoxy-substituted DIOX, such as 2-methyl-1,3-dioxolane or 4-methyl-1,3-dioxolane, etc.); 1,2-dimethoxyethane; 1,2-dimethoxyethane-based ethers (e.g., diglyme, triglyme, tetraglyme, ethyl glyme, etc.); ethylene carbonate; propylene carbonate; 1,2-butylene carbonate; 2,3-butylene carbonate; vinylene carbonate; methyl formate; γ-butyrolactone; sulfolane; acetonitrile; N,N-dimethyl formamide: N,N-dimethylacetamide; N,N-dimethylpropyleneurea; 1,1,3,3-tetramethylurea; beta aminoenones; beta aminoketones; methyltetrahydrofurfuryl ether; diethyl ether; tetrahydrofuran ("THF"); 2-methyl tetrahydrofuran; 2-methoxytetrahydrofuran; 2,5-dimethoxytetrahydrofuran; 3,5-dimethylisoxazole ("DMI"); 1,2-dimethoxypropane ("DMP"); and 1,2-dimethoxypropane-based ethers (e.g., substituted DMP, etc.).

Salts should be nearly or completely soluble with the selected solvent(s) and, as with the discussion of solvent characteristics above, without any degradation or adverse effects. Examples of typical salts used in LiFeS₂ cells include LiI ("lithium iodide"), LiCF₃SO₃ ("lithium triflate"), LiClO₄ ("lithium perchlorate"), Li(CF₃SO₂)₂N ("lithium imide"), Li(CF₃CF₂SO₂)₂N, LiBF₄ and Li(CF₃SO₂)₃C. Other potential candidates are lithium bis(oxalato)borate, lithium bromide, lithium hexafluorophosphate, potassium hexafluorophosphate and lithium hexafluoroarsenate. Two key aspects of salts are that they do not react appreciably with the housing, electrodes, sealing materials or solvents and that they do not degrade or precipitate out of the electrolyte under the typically expected conditions the battery will be exposed to (e.g., temperature, electrical load, etc.).

It is possible to use more than one solute to maximize certain aspects of performance. Lithium iodide and lithium triflate salts have been used in combination to provide improved low temperature discharge performance, as described in related U.S. Patent Publication No. 20060046154. Additional examples of electrolyte blends (i.e., salt and solvents combinations) that are appropriate for LiFeS₂ cylindrical cells can be found in U.S. Patent Publication Nos. 20060046152, 20060046153, 20090061293 or any of the electrolyte solvent, solute and additive references mentioned above.

Notably, unless noted to the contrary, the concentration of the solutes relative to the solvents as described herein is best expressed as moles of solute per kilogram of solution (molality). Molality of a solution remains constant irrespective of the physical conditions like temperature and pressure, whereas volume of some solvents typically increases with in temperature thereby yielding a decrease in molarity (i.e., moles per liter). Increasing the concentration of solute may enhance performance at higher rates, whereas decreasing the concentration may result in benefits during low temperature operation.

### Other Cell Components

The cell container is often a metal can with a closed bottom such as the can in FIG. 1. The can material will depend in part of the active materials and electrolyte used in the cell. A common material type is steel. For example, the can may be made of steel, plated with nickel on at least the outside to protect the outside of the can from corrosion. The type of plating can be varied to provide varying degrees of corrosion resistance or to provide the desired appearance. The type of steel will depend in part on the manner in which the container is formed. For drawn cans the steel can be a diffusion annealed, low carbon, aluminum killed, SAE 1006 or equivalent steel, with a grain size of ASTM 9 to 11 and equiaxed to slightly elongated grain shape. Other steels, such as stainless steels, can be used to meet special needs. For example, when the can is in electrical contact with the cathode, a stainless steel may be used for improved resistance to corrosion by the cathode and electrolyte.

The cell cover can be metal. Nickel plated steel may be used, but a stainless steel is often desirable, especially when the cover is in electrical contact with the cathode. The complexity of the cover shape will also be a factor in material selection. The cell cover may have a simple shape, such as a thick, flat disk, or it may have a more complex shape, such as the cover shown in FIG. 1. When the cover has a complex shape like that in FIG. 1, a type 304 soft annealed stainless steel with ASTM 8-9 grain size may be used, to provide the desired corrosion resistance and ease of metal forming. Formed covers may also be plated, with nickel for example.

The terminal cover should have good resistance to corrosion by water in the ambient environment, good electrical conductivity and, when visible on consumer batteries, an attractive appearance. Terminal covers are often made from nickel plated cold rolled steel or steel that is nickel plated after the covers are formed. Where terminals are located over pressure relief vents, the terminal covers generally have one or more holes to facilitate cell venting.

The gasket is made from any suitable thermoplastic material that provides the desired sealing properties. Material selection is based in part on the electrolyte composition. Examples of suitable materials include polyphthalamide, polypropylene, polyphenylene sulfide, tetrafluoride-perfluoroalkyl vinylether copolymer, polybutylene terephthalate and combinations thereof. Preferred gasket materials include polypropylene (e.g., PRO-FAX® grades from Basell Polyolefins in Wilmington, DE, USA) and polyphthalamide (e.g., AMODEL® grades from Solvay Advanced Polymers, Houston,TX). Small amounts of other polymers, reinforcing inorganic fillers and/or organic compounds may also be added to the base resin of the gasket.

The gasket may be coated with a sealant to provide the best seal. Ethylene propylene diene terpolymer (EPDM) is a suitable sealant material, but other suitable materials can be used.

If a ball vent is used, the vent bushing is made from a thermoplastic material that is resistant to cold flow at high temperatures (e.g., 75°C). The thermoplastic material comprises a base resin such as ethylene-tetrafluoroethylene, polybutylene terephthlate, polyphenylene sulfide, ethylene-chlorotrifluoroethylene, chlorotrifluoroethylene, perfluoro-alkoxyalkane, fluorinated perfluoroethylene polypropylene and polyetherether ketone. Ethylene-tetrafluorocthylcnc copolymer (ETFE), polyphenylene sulfide (PPS) and polybutylene terephthalate (PBT) are preferred. The resin can be modified by adding a thermal-stabilizing filler to provide a vent bushing with the desired sealing and venting characteristics at high temperatures. The bushing can be injection molded from the thermoplastic material. TEFZEL® grades of ETFE resin with chopped glass filler and polyphenylene sulfide (e.g., XTEL™ grades) from Chevron Phillips in The Woodlands, TX, USA are preferred thermoplastic bushing materials.

Any polymeric or metallic components should be tested with the electrolyte to insure they do not corrode or react with the electrolyte. Additional benefits may inure based on the appropriate selection of polymer and electrolyte, as disclosed in U.S. Patent Publication No. 20080226982.

The vent ball itself can be made from any suitable material that is stable in contact with the cell contents and provides the desired cell sealing and venting characteristic. Glasses or metals, such as stainless steel, can be used. In the event a foil vent is utilized in place of the vent ball assembly described above (e.g., pursuant to U.S. Patent Application Publication No. 20050244706), the above referenced materials may still be appropriately substituted.

### Electrodes

The anode comprises a strip of lithium metal, sometimes referred to as lithium foil. The composition of the lithium can vary, though for battery grade lithium, the purity is always high. The lithium can be alloyed with other metals, such as aluminum, to provide the desired cell electrical performance or handling ease, although the amount of lithium in any alloy should nevertheless be maximized and alloys designed for high temperature application (i.e., above the melting point of pure lithium) are not contemplated. Appropriate battery grade lithium-aluminum foil, containing 0.5 weight percent aluminum, is available from Chemetall Foote Corp., Kings Mountain, NC, USA.

Other anode materials may be possible, including sodium, potassium, zinc, magnesium and aluminum, either as co-anodes, alloying materials or distinct, singular anodes. Ultimately, the selection of an appropriate anode material will be influenced by the compatibility of that anode with the electrolyte solvent(s) and salt(s) (e.g., LiI), the cathode and/or the ether(s) selected. Lithium is preferred for its superior electrochemical qualities.

As in the cell in FIG. 1, a separate current collector (i.e., an electrically conductive member, such as a metal foil, on which the anode is welded or coated OR an electrically conductive strip running along the length of the anode) is not needed for the anode, since lithium has a high electrical conductivity. By not utilizing such a current collector, more space is available within the container for other components, such as active materials. Anode current collectors may be made of copper and/or other appropriate high conductivity metals so as long as they are stable when exposed to the other interior components of the cell (e.g., electrolyte).

The electrical connection must be maintained between each of the electrodes and the opposing terminals proximate to or integrated with the housing. An electrical lead 36 can be made from a thin metal strip connecting the anode or negative electrode to one of the cell terminals (the can in the case of the FR6 cell shown in FIG. 1). When the anode includes such a lead, it is oriented substantially along a longitudinal axis of the jellyroll electrode assembly and extends partially along a width of the anode. This may be accomplished embedding an end of the lead within a portion of the anode or by simply pressing a portion such as an end of the lead onto the surface of the lithium foil. The lithium or lithium alloy has adhesive properties and generally at least a slight, sufficient pressure or contact between the lead and electrode will weld the components together. The negative electrode may be provided with a lead prior to winding into a jellyroll configuration. The lead may also be connected via appropriate welds.

The metal strip comprising the lead 36 is often made from nickel or nickel plated steel with sufficiently low resistivity in order to allow sufficient transfer of electrical current through the lead and have minimal or no impact on service life of the cell, with a lead having less than 15mΩ/cm and preferably less than 4.5mΩ/cm being ideal. A preferred material is 304 stainless steel. Examples of other suitable negative electrode lead materials include, but are not limited to, copper, copper alloys, for example copper alloy 7025 (a copper, nickel alloy comprising about 3% nickel, about 0.65% silicon, and about 0.15% magnesium, with the balance being copper and minor impurities); and copper alloy 110; and stainless steel. Materials should remain stable within the cell even after the nonaqueous electrolyte is added. Examples of metals generally to be avoided but can be present as impurities in relatively minor amounts are aluminum and zinc.

The cathode is in the form of a strip that comprises a current collector and a mixture that includes one or more electrochemically active materials, usually in particulate form. Iron disulfide (FeS₂) is a preferred active material although the invention is applicable to most cathode materials that are stable with LiI and have a potential vs. Li that is less than 2.8V, including CuO, CuO₂ and all oxides of bismuth (e.g., Bi₂O₃, etc.). Notably, MnO₂ is not suitable because it has a potential that is too high when compared to Li, and MnO₂ (as well as most secondary cathode materials) possesses a nominal operating voltage well above 1.5V.

Preferably, the active material for a Li/FeS₂ cell cathode comprises at least 95 weight percent FeS₂, and most preferably FeS₂ is the sole active cathode material. Pyrite having a preferred purity level of at least 95 weight percent FeS₂ (i.e., "battery grade") is available from Washington Mills, North Grafton, MA, USA; Chemetall GmbH, Vienna, Austria; and Kyanite Mining Corp., Dillwyn, VA, USA. Note that the discussion of "purity" of FeS₂ acknowledges that pyrite is a specific and preferred mineral form of FeS₂. However, pyrite often times has small levels of impurities (e.g., silicon oxides) and, because only the FeS₂ is electrochemically active in pyrite, references to percent purity of FeS₂ may be made with respect to the total amount of pyrite including impurities provided in the cell. Additionally, pyrite may naturally vary, in terms of the stoichiometric amount of sulfur and iron found and/or in terms of the natural or deliberate introduction of certain dopants (e.g., metals in comparatively small amounts, preferably integrated within the structure of the pyrite). Thus, it should be understood that both the terms pyrite and FeS₂ generically also encompass these natural or synthetic variations, and for the purposes of any analytical characterization or electrochemical calculation/reaction, it is appropriate to treat the entirety of the electrochemically active material as FeS₂.

The current collector may be disposed within or imbedded into the cathode surface, or the cathode mixture may be coated onto one or both sides of a thin metal strip. Aluminum is a commonly used material. The current collector may extend beyond the portion of the cathode containing the cathode mixture. This extending portion of the current collector can provide a convenient area for making contact with the electrical lead connected to the positive terminal. It is desirable to keep the volume of the extending portion of the current collector to a minimum to make as much of the internal volume of the cell available for active materials and electrolyte.

The cathode is electrically connected to the positive terminal of the cell. This may be accomplished with an electrical lead, often in the form of a thin metal strip or a spring, as shown in FIG. 1, although welded connections are also possible. The lead is often made from nickel plated stainless steel. Other connections are disclosed in United States Patent Publication Nos. 20070275298, 20080254343 and 20080026288. Notably, to the extent a cell design may utilize one of these alternative electrical connectors/current limiting devices, the use of a PTC may be avoided. In the event an optional current limiting device, such as a standard PTC, is utilized as a safety mechanism to prevent runaway discharge/heating of the cell, a suitable PTC is sold by Tyco Electronics in Menlo Park, CA, USA. Other alternatives are also available.

### Separator

The separator is a thin microporous membrane that is ion-permeable and electrically nonconductive. It is capable of holding at least some electrolyte within the pores of the separator. The separator is disposed between adjacent surfaces of the anode and cathode to electrically insulate the electrodes from each other. Portions of the separator may also insulate other components in electrical contact with the cell terminals to prevent internal short circuits. Edges of the separator often extend beyond the edges of at least one electrode to insure that the anode and cathode do not make electrical contact even if they are not perfectly aligned with each other. However, it is desirable to minimize the amount of separator extending beyond the electrodes.

To provide good high power discharge performance it is desirable that the separator, in combination with the electrolyte, have the characteristics (pores with a smallest dimension of at least 0.005 µm and a largest dimension of no more than 5 µm across, a porosity in the range of 30 to 70 percent, an area specific resistance of from 2 to 15 ohm-cm² and a tortuosity less than 2.5) disclosed in U.S. Patent No. 5,290,414.

Suitable separator materials should also be strong enough to withstand cell manufacturing processes as well as pressure that may be exerted on the separator during cell discharge without tears, splits, holes or other gaps developing that could result in an internal short circuit. To minimize the total separator volume in the cell, the separator should be as thin as possible, preferably less than 25 µm thick, and more preferably no more than 22 µm thick, such as 20 µm or 16 µm. A high tensile stress is desirable, preferably at least 800, more preferably at least 1000 kilograms of force per square centimeter (kgf/cm²). For an FR6 type cell the preferred tensile stress is at least 1500 kgf/cm² in the machine direction and at least 1200 kgf/cm² in the transverse direction, and for a FR03 type cell the preferred tensile strengths in the machine and transverse directions are 1300 and 1000 kgf/cm², respectively. Preferably the average dielectric breakdown voltage will be at least 2000 volts, more preferably at least 2200 volts and most preferably at least 2400 volts. The preferred maximum effective pore size is from 0.08 µm to 0.40 µm, more preferably no greater than 0.20 µm. Preferably the BET specific surface area will be no greater than 40 m²/g, more preferably at least 15 m²/g and most preferably at least 25 m²/g. Preferably the area specific resistance is no greater than 4.3 ohm-cm², more preferably no greater than 4.0 ohm-cm², and most preferably no greater than 3.5 ohm-cm². These properties are described in greater detail in U.S. Patent Publication No. 20050112462.

Separator membranes for use in lithium batteries are often made of polypropylene, polyethylene or ultrahigh molecular weight polyethylene, with polyethylenes being preferred. The separator can be a single layer of biaxially oriented microporous membrane, or two or more layers can be laminated together to provide the desired tensile strengths in orthogonal directions. A single layer is preferred to minimize the cost. Suitable microporous separators are available from Tonen Chemical Corp., available from EXXON Mobile Chemical Co., Macedonia, NY, USA and from Entek Membranes in Lebanon, OR, USA.

### Cell Construction and Manufacture

The anode, cathode and separator strips are combined together in an electrode assembly. The electrode assembly may be a spirally wound design, such as that shown in FIG. 1, made by winding alternating strips of cathode, separator, anode and separator around a mandrel, which is extracted from the electrode assembly when winding is complete. At least one layer of separator and/or at least one layer of electrically insulating film (e.g., polypropylene) may be generally wrapped around the outside of the electrode assembly. This serves a number of purposes: it helps hold the assembly together and may be used to adjust the width or diameter of the assembly to the desired dimension. The outermost end of the separator or other outer film layer may be held down with a piece of adhesive tape or by heat sealing. The anode can be the outermost electrode, as shown in FIG. 1, or the cathode can be the outermost electrode, as disclosed in U.S. Patent Publication No. 20080026293. Either electrode can be in electrical contact with the cell container, but internal short circuits between the outmost electrode and the side wall of the container can be avoided when the outermost electrode is the same electrode that is intended to be in electrical contact with the can.

The cell can be closed and sealed using any suitable process. Such processes may include, but are not limited to, crimping, redrawing, colleting and combinations thereof. For example, for the cell in FIG. 1, a bead is formed in the can after the electrodes and insulator cone are inserted, and the gasket and cover assembly (including the cell cover, contact spring and vent bushing) are placed in the open end of the can. The cell is supported at the bead while the gasket and cover assembly are pushed downward against the bead. The diameter of the top of the can above the bead is reduced with a segmented collet to hold the gasket and cover assembly in place in the cell. After electrolyte is dispensed into the cell through the apertures in the vent bushing and cover, a vent ball is inserted into the bushing to seal the aperture in the cell cover. A PTC device and a terminal cover are placed onto the cell over the cell cover, and the top edge of the can is bent inward with a crimping die to hold retain the gasket, cover assembly, PTC device and terminal cover and complete the sealing of the open end of the can by the gasket.

With respect to the cathode, the cathode is coated onto a metallic foil current collector, typically an aluminum foil with a thickness between 18 and 20 µm, as a mixture which contains a number of materials that must be carefully selected to balance the processability, conductivity and overall efficiency of the coating. This coating consists primarily of iron disulfide (and its impurities); a binder that is generally used to hold the particulate materials together and adhere the mixture to the current collector; one or more conductive materials such as metal, graphite and carbon black powders added to provide improved electrical conductivity to the mixture, although the amount of conductor depends upon the electrical conductivity of the active material and binder, the thickness of the mixture on the current collector and the current collector design; and various processing or rheological aids that are dependent upon the coating method, the solvent used and/or the mixing method itself.

The following are representative materials and processes that may be utilized in the cathode mix formulation for a lithium-iron disulfide cell: pyrite (at least 95% pure); conductor (Pure Black 205-110 from Superior Graphite Chicago, IL, and/or MX15 from Timcal Westlake, OH); and binder/processing aids (styrene-ethylene/butylenes-styrene (SEBS) block copolymer, such as g1651 from Kraton Polymers Houston, TX). Small amounts of impurities may be naturally present in any of the aforementioned materials, although care should be taken to utilize the highest purity pyrite source available so as to maximize the amount of FeS₂ present within the cathode. One preferred formulation for the cathode, as well as the underlying cell design principles relevant thereto, can be found in U.S. Patent Publication No. 20090104520.

It is also desirable to use cathode materials with small particle sizes to minimize the risk of puncturing the separator. For example, FeS₂ is preferably sieved through a 230 mesh (62 µm) screen before use or the FeS₂ may be milled or processed as described in U.S. Patent Publication No. 20050233214. Other cathode mix components should be carefully selected with eye toward chemical compatibility/reactivity and to avoid similar particle-size-based mechanical failure issues.

The cathode mixture is applied to the foil collector using any number of suitable processes, such as three roll reverse, comma coating or slot die coating. The methods of coating are described in U.S. Patent Publication Nos. 20080026288 and 20080026293. One preferred method of making FeS₂ cathodes is to roll coat a slurry of active material mixture materials in a highly volatile organic solvent (e.g., trichloroethylene) onto both sides of a sheet of aluminum foil, dry the coating to remove the solvent, calender the coated foil to compact the coating, slit the coated foil to the desired width and cut strips of the slit cathode material to the desired length. The use of volatile solvents maximize the efficiency of recovering such solvents, although it is possible to utilize other solvents, including hyrdorcarbons, mineral oils, aqueous-based compositions and mixtures thereof, in order to roll coat the cathode mix described above.

After or concurrent with drying to remove any unwanted solvents, the resulting cathode strip is densified via calendering or the like to further compact the entire positive electrode. In light of the fact that this strip will then be spirally wound with separator and a similarly (but not necessarily identically) sized anode strip to form a jellyroll electrode assembly, this densification maximizes loading of electrochemical material in the jellyroll electrode assembly. However, the cathode cannot be over-densified as some internal cathode voids are need to allow for expansion of the iron disulfide during discharge and wetting of the iron disulfide by the organic electrolyte, as well as to avoid unwanted stretching and/or de-lamination of the coating.

### Chelating Additive(s)

As noted above, the chelating additive should be soluble in electrolyte solvents and non-reactive with respect to the solvent(s), solute(s) and electrochemically active materials in a battery. The chelator(s) acts to sequester metal ions in a coordination complex of sufficient stability to prevent them from reacting with the electrodes. These unwanted metal ion impurities dissolve into the electrolyte from impurities present in the cathode coating and/or other internal cell components. Notably, the ability of a chelator to sequester metal ions *in situ* distinguishes chelators, as used herein, from additives having transition-metal complexes where ligands coordinate one or more ions deliberately inserted into the compound prior to that compound's use as an additive in an electrochemical cell.

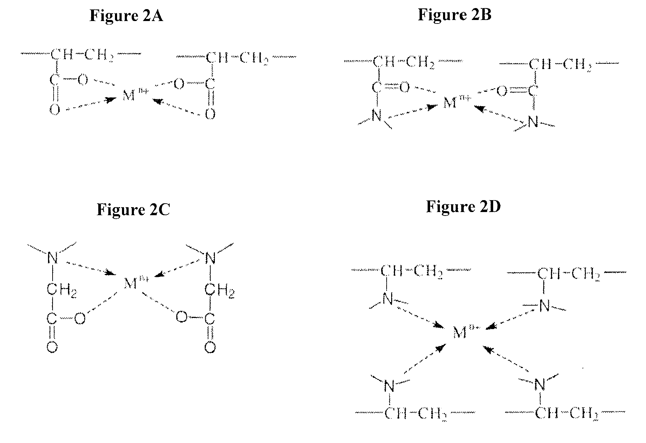

The chelating process involves the interaction of the metal ion with a molecule having long-range attractive electrostatic interactions. Once the ion interacts with the molecule, the ion becomes fixed in place by ligands of that molecule or of separate molecules by way of intra- or inter-chain interactions, respectively. Chelators operating by way of intra-chain molecular interactions with the ion typically show higher chemical and thermal stability. To the extent the chelator comprises a polymer, FIG. 2 depicts the general structure of four preferred types of polymer-metal complexes. In FIG. 2A, a carboxylic group is included within the polymer structure to allow for coordination by/between the oxygen atoms and the ion. In a similar manner, FIG. 2B and 2C respectively illustrate coordination by the oxygen and nitrogen atoms in an acrylamide and maleylglycine groups. FIG. 2D shows coorindation by nitrogen atoms in an amine.

Notably, one or more of these functional groups may be incorporated into a chelator to create intra-chain coordination and/or inter-chain molecular cross-links, as most metal ions must coordinate with more than one ligand. In some cases, the coordination bonds can be strong enough to overcome the solvating power of an otherwise good solvent, thereby leading to precipitation of the complex out of solution. To the extent that it may impede electrochemical cell performance, precipitation of impurities is not desired. Nevertheless, precipitation or gel formation of a coordinated complex may be permissible in some cell designs, especially to the extent that the precipitate or gel continues to permit the desired electrochemical reaction(s) to proceed. In a preferred embodiment, the chelating agents for lithium-iron disulfide cells should remain in liquid form (i.e., should not gel or precipitate).

A polychelatogen is a polymer with ligands that can form coordination bonds. Sufficient stability to prevent the coordinated metal cation from reacting with the anode is desired. Polychelatogens can be introduced to the cell through direct addition to the electrolyte, through mixing with the dry or wet cathode formulation (especially by way of the binder) or by binding to the separator. In each instance, once the cell is constructed, any metal ions that may be present are coordinated by the polychelatogen to prevent any deleterious effects. In a preferred embodiment, the polychelatogen is introduced to the cell via the liquid electrolyte.

Organic chelators of a polymeric or non-polymeric nature that dissolve in ether solvents are preferred. As used herein, polymeric refers to molecules having small, repeating functional units and, as such, should not be construed as being limited only to solids or films. Poly(ethyl acrylate/acrylic acid) and diphenylthiocarbazone, as well as various derivatives thereof, are specific examples of such chelators. Other examples include: poly(acrylamide/acrylic acid), poly(methyl methacrylate/methacrylic acid), poly(n-butyl acrylate/acrylic acid), poly(ethylene/acrylic acid), poly(butadiene/maleic acid), ethylenediaminetetra-acetic acid (EDTA), diphenylthiocarbazone (DPTC), phenothiazine (PTZ) and carboxymethylcellulose (CMC). In each instance, the comonomer ratio for polymeric materials may vary anywhere from in excess of 95:5 to less than 30:70. Other ratios may be possible. Chelators that are soluble in solvent mixtures of DIOX and DME and bind with zinc, ferric, and ferrous ions are preferred. Solvents suitable for other embodiments of the invention are also identified elsewhere herein.

Initially, potential impurities present in the raw materials used for the cell are analyzed, with particular attention given to impurities that are known to solublize in the electrolyte of interest. To the extent that soft shorts are believed to be caused by plating at the anode in the system of interest, these potential impurities are then checked for their effect on the electrodes. For example, the electrolyte may be deliberately contaminated with chemicals that mimic impurities, and then the effects of that spiked electrolyte observed against the electrode. Cells or samples are constructed using this spiked electrolyte, and key metrics analyzed (e.g., visual inspection, OCV voltage of fresh cells, service on high drain rate applications, shelf life, abuse testing, etc.). In a lithium-iron disulfide electrolyte, a mixture of DIOX and DME may be spiked with sulfates of zinc, iron and/or copper, which are believed to be the most common soluble impurities in pyrite. Other soluble impurities may be identified, either coming from the cathode or the other materials or components used in such cells.

The chelator(s) must be capable of binding the cations impurities thought to be present in the cell. From a kinetics point of view, the chelator should remain soluble, as opposed to a solid resin where absorption and diffusion of metal ions might slow the efficacy of the chelator to an unacceptable level. Polymeric and non-polymeric chelators may be identified by screening a list of known substances for their solubility in a known electrolyte solution. Additional checks for compatibility with the internal components of the cell (e.g., gaskets, venting mechanisms, leads, container materials, etc.) may also be performed. For example, in a lithium-iron disulfide cell, a carboxylic ligand would be expected to bind well with zinc, iron and copper cations. Notwithstanding the aforementioned kinetics considerations, some chelators may not be need to be soluble in the electrolyte, but instead can be provided to the formulation of the electrode(s) or bound to/integral with the polymeric material(s) of one or more of the internal components (e.g., the separator, the sealing materials, the container, the current collector, etc.).

Finally, the efficacy of the coordination complex to prevent soft shorting and/or improve cell performance is established. Here, spiked electrolyte samples are combined with the chelator(s) of interest at an appropriate equivalence ratio of ligand to cation. Further consideration should also be given to the concentration and solubility of impurities that are likely to be encountered. As above, key metrics are then analyzed. The ideal chelator will not have any deleterious effects upon the performance or safety of the final battery and/or may enhance some or all of these metrics.

With the foregoing principles in mind, a method for manufacturing electrochemical cells is possible. Here, soluble impurities are identified from any and/or all of the raw materials and internal components. A chelator which coordinates the impurities and is compatible with the components and materials, including but not limited to the electrolyte, is then identified. The chelator is then introduced to the cell, by way of dissolving or adding to the electrolyte, by way of bonding to one or more of the internal components (including but not limited to the separator, current collector and/or container) or by way of forming the chelator as part of the components (including but not limited to using the chelator as polymeric resin or additive).

### Example 1

A list of known chelators for lithium-iron disulfide cells was compiled as shown in Table 1. Polymeric materials were purchased from Polysciences, Inc., of Warrington, PA. Ethylenediaminetetra-acetic acid was purchased from Sigma Aldrich Corp. of St. Louis, MO. PTZ and DPTC were purchased from Fisher Scientific of Pittsburgh, PA.

**Table 1. Chelators for Evaluation.**

| Chelator # | Material | CAS # |
|---|---|---|
| 1 | Diphenylthiocarbazone (DPTC) | 60-10-6 |
| 2 | Phenothiazine (PTZ) | 92-84-2 |
| 3 | Poly(ethyl acrylate/acrylic acid) (poly(EA:AA)) | 25085-35-2 |
| 4 | Poly(methyl methacrylate/methacrylic acid) (poly(MMA:MA)) | 25086-15-1 |
| 5 | Carboxymethylcellulose (CMC) | 9000-11-7 |
| 6 | Poly(acrylamide/acrylic acid) | 25085-02-3 |
| 7 | Poly(n-butyl acrylate/acrylic acid) | 25119-83-9 |
| 8 | Poly(ethylene/acrylic acid) | 9010-77-9 |
| 9 | Poly(butadiene/maleic acid) | 28265-35-2 |
| 10 | Ethylenediaminetetraacetic acid | 60-00-4 |

Approximately 0.5 g of each chelator identified in Table I was separately provided to a 5 mL sample of the preferred electrolyte, which contains approximately 0.75m of LiI dissolved in 65:35 DIOX:DME (on a volume basis). Each sample was stirred for 24 hours at ambient temperature, with visual inspection to confirm the absence of solids. In this manner, chelators 1, 2, 3 and 4 were selected for further study, insofar as the solubility for each of these chelators was at least 0.1 g/mL.

### Example 2

The effect of common impurities known to be present in iron disulfide was then simulated. Sulfates of zinc, iron and copper were dissolved in the electrolyte of interest from Example 1 at approximately 40% of their solubility. Small strips of lithium were then added to the solution, and the effects on both the lithium and the electrolyte were observed and compared against a "control" sample, where the electrolyte was not spiked with impurities. While the copper sulfate-spiked electrolyte behaved the same as the control (i.e., no changes were observed to the lithium or the electrolyte at intervals of 10 minutes, 1 hour and 7 hours), the iron and zinc sulfate-spiked electrolytes formed black spots on the lithium and, respectively, darkened the yellow electrolyte to a brownish red after one hour and clarified the electrolyte to an almost colorless solution, with grayish-white precipitate formed near the lithium. In this manner, it was determined that chelators capable of coordinating iron and zinc cations were required.

### Example 3

The ability of the various soluble chelators from Example 1 to bind the cations identified in Example 2 was then examined. The chelators of interest from Example 1 were provided at a 3:1 equivalence ratio of chelating ligand:metal ion concentration as shown in Table 2. The electrolyte was approximately 0.75m LiI in 65:35 DIOX:DME (on a volume basis).

**Table 2. Electrolyte Solutions for Evaluation.**

| | Concentration in g/mL | | | |
|---|---|---|---|---|
| "Spiked" Electrolyte | Chelator 1 | Chelator 2 | Chelator 3 | Chelator 4 |
| FeSO₄•7HOH @ 0.00201 | 0.0102 | 0.0079 | 0.0165 | 0.0158 |
| g/mL of electrolyte | | | | |
| ZnSO₄•7HOH @ 0.00129 | 0.0061 | 0.0048 | 0.0099 | 0.0095 |
| g/mL of electrolyte | | | | |

Small strips of lithium were individually added to the solutions in Table 2, similar to the procedure followed in Example 2. Chelator 1 and Chelator 3 were observed to have no effect on the lithium, thereby demonstrating their potential efficacy according to this invention. A chelator-spiked electrolyte combination that results in blackening of the lithium or precipitation in the electrolyte would be indicative of an ineffective chelator.

Notably, while chelators in Table 2 are limited to the soluble chelators identified in example 1, chelator 5 (CMC) could serve as a cathode binder material, in which case solubility in any electrolyte would be irrelevant. Nevertheless, in the spiked electrolytes of interest, it was determined that CMC would not prevent blackening of the lithium.

### Example 4

A series of FR6 cells were machine-wound with Chelators 1 and 3 added to the electrolyte at a concentration of 0.94% and 1.52% (w/w), repsectively. The electrolyte included lithium iodide dissolved in a blend of DIOX and DME. Relatively thin separators (16 microns polyethylene film) were utilized accentuate the potential for soft shorts. A control lot was constructed without the addition of any chelating agent.

The OCV was periodically monitored as the cells were stored at 71°C over a period of 8 weeks to simulate long term storage. A drop in the OCV over this period of time would indicate the formation of soft shorts, possibly caused by the presence of unwanted ferrous or other metal impurities. The results, in terms of number of cells possessing an OCV within the stated range, are shown in Table 3, where "C" represents control cells, "1" represents cells with Chelator 1 and "3" represents cells with Chelator 3.

**Table 3. OCV maintenance at 71°C storage.**

| **OCV** | **Initial** | | | **1 week** | | | **2 week** | | | **4 week** | | | **8 week** | | |
|---|---|---|---|---|---|---|---|---|---|---|---|---|---|---|---|
| | **C** | **1** | **3** | **C** | **1** | **3** | **C** | **1** | **3** | **C** | **1** | **3** | **C** | **1** | **3** |
| **> 1.85** | | | | 88 | | 100 | 76 | | 100 | 76 | | 100 | 78 | | 100 |
| **1.80 to 1.84** | | | | 12 | 100 | | 12 | 100 | | 12 | 100 | | 18 | 100 | |
| **1.79 to 1.75** | 100 | | 100 | | | | 6 | | | 6 | | | 6 | | |
| **< 1.74** | | 100 | | | | | 6 | | | 6 | | | | | |

Thus, cells utilizing Chelators 1 and 3 exhibit excellent OCV maintenance in comparison to the control, thereby indicating that the chelators are effectively sequestering metal ion impurities which might otherwise contribute to OCV instability and/or soft shorting. Furthermore, the chelator exhibited only a minor increase on overall cell impedance, while still delivering significant service at room temperature.

While the examples above illustrate a particularized embodiment of the invention, this approach may be applied to any number of other electrolyte blends for lithium iron disulfide cells (e.g., different solutes, different solvents, different concentrations, different volume ratios, different polymeric and non-polymeric chelators, etc.). Furthermore, it may be used to identify chelators for different electrochemical systems. Finally, the invention should be understood to encompass the method of investigation, as well as the method as it may be applied to manufacturing and operating electrochemical cells. That is, these principles may be applied to any known battery system, as well as its manufacturing process and method of use/operation, in order to sequester and remove unwanted impurities from an electrochemical cell. Additional tests of the impact a potential chelator may have on OCV, ANSI digital still camera service, shelf life/stability, low to moderate drain service tests, abuse testing and the like could also be relevant to the overall efficacy of a chelator otherwise identified as acceptable under the foregoing procedures.

To the extent that greater emphasis is now being placed on a battery's ability to perform across a wide range of temperatures, LiFeS₂ batteries are particularly attractive because, unlike other widely available consumer-sized cells (e.g., alkaline, carbon zinc), LiFeS₂ delivers excellent service on high power applications while retaining an ability to deliver capacity at temperatures well below freezing. As a result, particular emphasis has been given to this cell chemistry. However, it may be possible to incorporate the principles of this invention in other lithium chemistries, particularly as they relate to primary batteries.

## Claims

1. A primary electrochemical cell (10) comprising:
an anode (18),
a cathode (20) including an active material having a maximum potential versus lithium that is less than 2.8 volts and a nominal operating voltage of 1.5 volts or less; and
a liquid electrolyte
**characterized in that** the liquid electrolyte comprises a chelating agent selected from the group consisting of: poly(ethyl acrylate/acrylic acid), derivatives of poly(ethyl acrylate/acrylic acid), diphenylthiocarbazone, derivatives of diphenylthiocarbazone, poly(acrylamide/acrylic acid), poly(methyl methacrylate/methacrylic acid), poly(n-butyl acrylate/acrylic acid), poly(ethylene/acrylic acid), poly(butadiene/maleic acid),
ethylenediaminetetraacetic acid, phenothiazine and carboxymethylcellulose.

2. The electrochemical cell (10) according to claim 1, wherein the anode (18) consists of lithium or a lithium alloy and the cathode (20) includes iron disulfide.

3. Use of a chelating agent selected from the group consisting of:
poly(ethyl acrylate/acrylic acid), derivatives of poly(ethyl acrylate/acrylic acid), diphenylthiocarbazone, derivatives of diphenylthiocarbazone, poly(acrylamide/acrylic acid), poly(methyl methacrylate/methacrylic acid), poly(n-butyl acrylate/acrylic acid), poly(ethylene/acrylic acid), poly(butadiene/maleic acid),
ethylenediaminetetraacetic acid, phenothiazine and carboxymethylcellulose in a liquid electrolyte of a primary electrochemical cell (10) for sequestering at least one metal ion impurity present within the cell.

4. The use according to claim 3, wherein the chelating agent remains soluble in the liquid electrolyte after the at least one metal ion impurity is sequestered by the chelating agent.

5. The use according to claim 3 or 4, wherein the metal ion impurity is selected from the group consisting of zinc ions, ferric ions, ferrous ions and copper ions.

6. The use according to any of claims 3 to 5, wherein the electrochemical cell (10) comprises an anode (18) consisting of lithium or a lithium alloy and wherein the cathode (20) includes iron disulfide.

## Patentansprüche

1. Elektrochemische Primärzelle (10), umfassend:
eine Anode (18);
eine Kathode (20), die ein aktives Material umfasst, das ein maximales Potential gegenüber Lithium von weniger als 2,8 Volt und eine Nennbetriebsspannung von 1,5 Volt oder weniger aufweist; und
einen flüssigen Elektrolyten;
**dadurch gekennzeichnet, dass** der flüssige Elektrolyt ein Chelatisierungsmittel umfasst, das aus der Gruppe ausgewählt ist, die aus Poly(ethylacrylat/acrylsäure), Derivaten von Poly(ethylacrylat/acrylsäure), Diphenylthiocarbazon, Derivaten von Diphenylthiocarbazon, Poly(acryl-amid/acrylsäure), Poly(methylmethacrylat/methacrylsäure), Poly(n-butyl-acrylat/acrylsäure), Poly(ethylen/acrylsäure), Poly(butadien/maleinsäure), Ethylendiamintetraessigsäure, Phenothiazin und Carboxymethylcellulose besteht.

2. Elektrochemische Zelle (10) gemäß Anspruch 1, wobei die Anode (18) aus Lithium oder einer Lithiumlegierung besteht und die Kathode (20) Eisendisulfid umfasst.

3. Verwendung eines Chelatisierungsmittels, das aus der Gruppe ausgewählt ist, die aus Poly(ethylacrylat/acrylsäure), Derivaten von Poly(ethylacrylat/ acrylsäure), Diphenylthiocarbazon, Derivaten von Diphenylthiocarbazon, Poly(acrylamid/acrylsäure), Poly(methylmethacrylat/methacrylsäure), Poly(n-butylacrylat/acrylsäure), Poly(ethylen/acrylsäure), Poly(butadien/ maleinsäure), Ethylendiamintetraessigsäure, Phenothiazin und Carboxymethylcellulose besteht, in einem flüssigen Elektrolyten einer elektrochemischen Primärzelle (10) zum Maskieren wenigstens einer Metallion-Verunreinigung, die innerhalb der Zelle vorhanden ist.

4. Verwendung gemäß Anspruch 3, wobei das Chelatisierungsmittel in dem flüssigen Elektrolyten löslich bleibt, nachdem die wenigstens eine Metallion-Verunreinigung von dem Chelatisierungsmittel maskiert wurde.

5. Verwendung gemäß Anspruch 3 oder 4, wobei die Metallion-Verunreinigung aus der Gruppe ausgewählt ist, die aus Zinkionen, Eisen(III)ionen, Eisen(II)ionen und Kupferionen besteht.

6. Verwendung gemäß einem der Ansprüche 3 bis 5, wobei die elektrochemische Zelle (10) eine Anode (18) umfasst, die aus Lithium oder einer Lithiumlegierung besteht, und wobei die Kathode (20) Eisendisulfid umfasst.

## Revendications

1. Cellule électrochimique primaire (10) comprenant :
une anode (18),
une cathode (20) comprenant un matériau actif présentant un potentiel maximal par rapport au lithium qui est inférieur à 2,8 volts et une tension nominale de fonctionnement de 1,5 volt ou moins ; et
un électrolyte liquide
**caractérisée en ce que** l'électrolyte liquide comprend un agent de chélation choisi dans le groupe constitué par : un poly(acrylate d'éthyle/acide acrylique), les dérivés de poly(acrylate d'éthyle/acide acrylique), la diphénylthiocarbazone, les dérivés de diphénylthiocarbazone, un poly(acrylamide/acide acrylique), un poly(méthacrylate de méthyle/acide méthacrylique), un poly(acrylate de n-butyle/acide acrylique), un poly(éthylène/acide acrylique), un poly(butadiène/acide maléique), l'acide éthylènediaminetétraacétique, la phénothiazine et la carboxyméthylcellulose.

2. Cellule électrochimique (10) selon la revendication 1, dans laquelle l'anode (18) est constituée de lithium ou d'un alliage de lithium et la cathode (20) comprend du disulfure de fer.

3. Utilisation d'un agent de chélation choisi dans le groupe constitué par :
un poly(acrylate d'éthyle/acide acrylique), les dérivés de poly(acrylate d'éthyle/acide acrylique), la diphénylthiocarbazone, les dérivés de diphénylthiocarbazone, un poly(acrylamide/acide acrylique), un poly(méthacrylate de méthyle/acide méthacrylique), un poly(acrylate de n-butyle/acide acrylique), un poly(éthylène/acide acrylique), un poly(butadiène/acide maléique), l'acide éthylènediaminetétraacétique, la phénothiazine et la carboxyméthylcellulose dans un électrolyte liquide d'une cellule électrochimique primaire (10) pour séquestrer au moins une impureté de type ion métallique présente au sein de la cellule.

4. Utilisation selon la revendication 3, dans laquelle l'agent de chélation reste soluble dans l'électrolyte liquide après que la au moins une impureté de type ion métallique soit séquestrée par l'agent de chélation.

5. Utilisation selon la revendication 3 ou 4,
dans laquelle l'impureté de type ion métallique est choisie dans le groupe constitué par les ions de zinc, les ions ferriques, les ions ferreux et les ions de cuivre.

6. Utilisation selon l'une quelconque des revendications 3 à 5, dans laquelle la cellule électrochimique (10) comprend une anode (18) constituée de lithium ou d'un alliage de lithium et dans laquelle la cathode (20) comprend du disulfure de fer.
